# EUROPÄISCHE PATENTSCHRIFT

(11) **EP 0 492 522 B1**
(45) Veröffentlichungstag und Bekanntmachung des Hinweises auf die Patenterteilung: **01.02.1995**
(21) Anmeldenummer: 91121986.3
(22) Anmeldetag: 20.12.1991
(51) Int. Cl.: B65D 25/14, B65D 77/04

(54) **Mehrwegbehältnis**
Reusable container
Récipient réutilisable

(30) Priorität: 21.12.1990 DE 4041266
(43) Veröffentlichungstag der Anmeldung: 01.07.1992
(73) Patentinhaber: STO AKTIENGESELLSCHAFT, D-79778 Stühlingen (DE)
(72) Erfinder: Abke, Herbert, W-7894 Stühlingen/Weizen (DE); Quittmann, Jürgen, W-4803 Steinhagen (DE)
(74) Vertreter: KOHLER SCHMID + PARTNER

(56) Entgegenhaltungen:
- CH-A- 350 243
- US-A- 3 423 004
- US-A- 4 476 255
- US-A- 5 063 111

## Beschreibung

Die Erfindung betrifft ein Mehrwegbehältnis zur Aufnahme von Dispersionsfarben und/oder Putzen mit einer formstabilen Schale und mit einer mechanisch belastbaren Innenverkleidung, die selbständig formstabil ist und die Innenkonturen der Schale aufweist, wobei die Innenverkleidung das aufzunehmende Gut von der Schale trennt.

Ein derartiges Mehrwegbehältnis ist aus der US 3 423 004 bekannt. Das bekannte Mehrwegbehältnis dient zur Aufbewahrung von Lebensmitteln.

Handelt es sich bei den vom Mehrwegbehältnis aufzunehmenden dispersen Systemen aber um stark haftende Stoffe wie Farben, Leime, Putze usw., so ist es zeitaufwendig, das Mehrwegbehältnis vor einer erneuten Verwendung zufriedenstellend zu reinigen. Bei der Reinigung kann das Mehrwegbehältnis beschädigt werden, und vielfach ist eine Reinigung des Mehrwegbehältnisses gar nicht möglich.

Ein weiteres derartiges Mehrwegbehältnis mit einem einsetzbaren Innenteil ist aus der CH 350 243 bekannt.

Ferner hat sich gezeigt, daß Vermischungen von Stoffen mit abrasiven Stoffkomponenten in folienbeschichteten Mehrwegbehältnissen nicht herstellbar sind, weil die Schutzfolie beim Mischvorgang beschädigt wird.

Versucht man von einem folienbeschichteten Mehrwegbehältnis die Folie abzuziehen und sie durch eine neue Folie zu ersetzen, so ist dies nur maschinell mit einem großen apparativen Aufwand möglich. Dabei besteht die Gefahr, daß die Folie reißt.

Eine mehrfache Wiederverwendung von Mehrwegbehältnissen beliebiger Art ist aber deshalb schon angezeigt, weil eine zufriedenstellende Entsorgung vieler Kunststoffmaterialien derzeit nicht möglich ist. Schwer abbaubare Kunststoffe sind als Materialen für Behältnisse aber vielfach deshalb besonders geeignet, weil sie vom Eigengewicht leicht, einfach herstellbar und stark gewichtsbelastbar sind.

Aufgabe der Erfindung ist es deshalb, die bekannten Behältnisse derart weiterzubilden, daß sie besonders einfach und sicher einer Mehrfachnutzung zugeführt werden können.

Diese Aufgabe wird erfindungsgemäß dadurch gelöst, daß an der Innenverkleidung mindestens ein flächenhafter Abschnitt schwenkbar angeordnet ist, der die Schale als Außenverkleidung lösbar umgreift.

Das erfindungsgemäße Mehrwegbehältnis hat damit den wesentlichen Vorteil, daß die Schale, die dem Mehrwegbehältnis die Festigkeit verleiht, nicht mit dem Gut, das das Mehrwegbehältnis aufnimmt, in Berührung kommt. Durch die eigenständige Formstabilität der Innenverkleidung ist gewährleistet, daß die Innenverkleidung nicht in sich selbst zusammenfallen kann und sie sich stets in gewünschter Weise an die Schalenkontur anschmiegt. Die formstabile Innenverkleidung ist mechanisch belastbar und kann einfach und leicht durch eine saubere unverschmutzte Innenverkleidung ersetzt werden. Danach kann das Mehrwegbehältnis erneut befüllt und sogar einem neuen Verwendungszweck zugeführt werden.

Da an der Innenverkleidung mindestens ein flächenhafter Abschnitt vorgesehen ist, der gegenüber der Innenverkleidung verschwenkbar angeordnet ist, so ist es auch möglich, Flächenteile der Außenfläche der Schale vor Verschmutzung schützend zu bedecken. Über einen derartigen flächenhaften Abschnitt kann auch die Innenverkleidung im verschmutzten Zustand leichter aus der Schale herausgezogen werden.

Sind die flächenhaften Abschnitte derart ausgebildet, daß sie die Außenfläche der Schale vollständig ummanteln können, so kann ein im Mehrwegbehältnis gelagertes Gut weder innen noch außen an der Schale selbst anhaften. Die flächenhaften Abschnitte sind über Klebebänder an der Außenfläche der Schale befestigbar, oder sie weisen im Randbereich Rastmittel auf, die in Ausnehmungen an der Schale einrasten können. Dies ist in besonders einfacher Weise dann möglich, wenn die Schale eine Bodenleiste aufweist und der flächenhafte Abschnitt beim Anlegen an die Außenwand der Schale über eine Rastnase hinter die Bodenleiste greifen kann.

Ist die Außenfläche der Innenverkleidung und die Innenfläche der Schale mit Ausformungen versehen, die formschlüssig ineinandergreifende Mittel aufweisen, so ist auch bei zylinderförmigen Mehrwegbehältnissen eine noch größere Sicherheit gegeben, daß die Innenverkleidung verdrehfest in der Schale sitzt. Soll die Innenverkleidung ausgewechselt werden, so werden die flächenhaften Abschnitte von der Außenwand der Schale abgezogen oder davon entrastet, und die Innenverkleidung kann über die flächenhaften Abschnitte aus der Schale herausgezogen werden.

Eine zufriedenstellende Entsorgung einer verschmutzten Innenverkleidung ist möglich, wenn das Material der Innenverkleidung von ultravioletten Strahlen zersetzbar ist. Die Innenverkleidung kann auch aus einem Material gefertigt sein, das biologisch abbaubar ist.

Ist an der Innenverkleidung ein erster Rand vorgesehen, der einem zweiten Rand der Schale nachgebildet ist und der den zweiten Rand der Schale zumindest teilweise ummantelt, so ist auch gewährleistet, daß das Behältnis in sich dicht ist, und es kann über einen Deckel, der an die Schale angepaßt ist, dicht verschlossen werden.

Die Außenverkleidung kann auch mit Sollbruchstellenbändern versehen sein, damit verschmutzte Verkleidungen schneller und einfach von der Schale wieder abgezogen werden können.

Die erfindungsgemäße Innenverkleidung wird in besonders einfacher Weise und kostengünstig im Tiefziehverfahren hergestellt. Dieses Verfahren erlaubt eine große Anpaßgenauigkeit der Innenverkleidung an vorgegebene Schalenkonturen.

Es ist weiterhin auch möglich, daß eine Schale von einer Innenverkleidung und einer Außenverkleidung ummantelt ist. Dabei sind sowohl die Innenverkleidung wie auch die Außenverkleidung für sich selbst formstabil. Die Innenverkleidung und die Außenverkleidung werden über die Schale geschoben. Auch die Außenverkleidung ist aus einem Material gefertigt, das umweltfreundlich abbaubar ist. Sind die Verkleidungen an der Schale sowohl innen wie auch außen angebracht, so werden die Verkleidungen miteinander stoffschlüssig über einen beispielsweise bekannten Schweißvorgang verbunden.

Die erfindungsgemäße Innenverkleidung ermöglicht es, auch schon gefertigte Gefäße, Gebinde, Eimer und Schalen vor einer Verschmutzung sicher zu schützen.

Derartig geschützte Schalen können entweder vom Benutzer selbst gesäubert werden, indem er die Innenverkleidung auswechselt, oder verschmutzte Behältnisse werden vom Vertreiber zurückgenommen und von diesem enthüllt und mit einer neuen Verkleidung beispielsweise maschinell versehen. Die Außenverkleidung kann auch getrennt von der Schale bedruckt werden, so daß die Schale selbst stets neutral bleiben kann.

Das erfindungsgemäße Mehrwegbehältnis wird bevorzugt für die Aufnahme von dispersonsgebundenen Beschriftungen eingesetzt wie Dispersionsfarben, kunstharzgebundene Putze und dispersionsgebundene Klebe- und/oder Spachtelmassen. Das Mehrwegbehältnis wird als Mischbehältnis, Arbeitsbehältnis und als Transportbehältnis eingesetzt. Unabhängig vom Mehrwegbehältnis, das bevorzugt aus Polypropylen (PP), Polyethylen (PE), Polystyrol (PS), Polyester, Polyamid (PA) gefertigt ist, kann die belastbare Schale gut wiederaufgearbeitet werden, weil die Schale sauber ist und ihr kein Schmutz anhaftet. Auch die Wiederaufarbeitung des Mehrwegbehältnisses ist vorteilhaft, weil wesentlich weniger Material bei der Wiederaufarbeitung anfällt als bisher.

Weitere Vorteile ergeben sich aus der Beschreibung und der beigefügten Zeichnung. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:
- Fig. 1: ein erfindungsgemäßes Mehrwegbehältnis mit einer Innenverkleidung, die flächenhafte Abschnitte aufweist;
- Fig. 2: ein weiteres Ausführungsbeispiel eines erfindungsgemäßen Mehrwegbehältnisses in Explosionsdarstellung mit einer Innenverkleidung und einer Außenverkleidung;
- Fig. 3: eine Draufsicht auf eine erfindungsgemäße Innenverkleidung mit aufgeklappten flächenförmigen Abschnitten;
- Fig. 4: ein erfindungsgemäßes Mehrwegbehältnis, teilweise im Aufbruch, mit einer Innen- und einer Außenverkleidung;
- Fig. 5: einen Schnitt durch eine erfindungsgemäße Mehrwegbehältniswand.

Die einzelnen Figuren der Zeichnung zeigen teilweise stark schematisiert den erfindungsgemäßen Gegenstand und sind nicht maßstäblich zu verstehen. Die Gegenstände der einzelnen Figuren sind teilweise stark vergrößert bzw. verkleinert dargestellt, damit ihr Aufbau besser gezeigt werden kann.

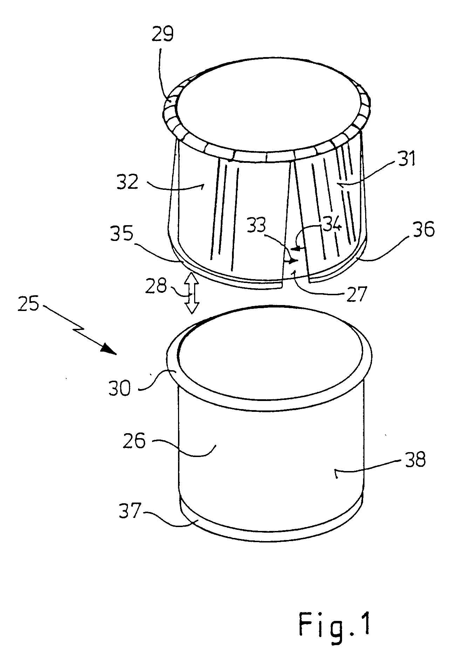

Fig. 1 zeigt ein Mehrwegbehältnis 25, das in Explosionsdarstellung eine Schale 26 getrennt von einer Innenverkleidung 27 zeigt. Die Schale 26 kann aus Polypropylen, Polyäthylen, Polysterol, Polyester, Polyamid gefertigt werden. Die Schale 26 weist eine mehrfach dickere Materialstärke auf als die Innenverkleidung 27, die beispielsweise aus einem Kunststoffmaterial von einer Stärke gefertigt ist, die der Innenverkleidung 27 eine selbständige Formstabilität verleiht. In die Innenverkleidung 27 des Mehrwegbehältnisses 25 ist ein Gut einfüllbar. Bei dem Gut kann es sich um ein beliebiges disperses System handeln. Die Innenverkleidung 27 ist in Pfeilrichtungen 28 verschiebbar. Wird die Innenverkleidung 27 in die Schale 26 eingeführt, so ist dieser Bewegungsvorgang dann abgeschlossen, wenn ein erster Rand 29 auf einem zweiten Rand 30 der Schale 26 zur Anlage kommt. An der Innenverkleidung 27 sind flächenhafte Abschnitte 31, 32 ausgebildet, die an den ersten Rand 29 angrenzen. Die flächenhaften Abschnitte 31, 32 sind über eine Art Filmscharnier mit dem ersten Rand 29 befestigt und sind gegenüber dem ersten Rand 29 in Pfeilrichtung 33, 34 verschwenkbar. An den freien Enden der flächenhaften Abschnitte 31, 32 sind Randstreifen 35, 36 ausgebildet, über die die Innenverkleidung 27 an einer Bodenleiste 37 oder an einer Außenfläche 38 der Schale 26 dann befestigbar sind, wenn die Innenverkleidung 27 in die Schale 26 eingeschoben ist und die flächenhaften Abschnitte 31, 32 an der Außenfläche 38 anliegen. Die flächenhaften Abschnitte 31, 32 sind beispielsweise über Klebestreifen an der Außenfläche 38 befestigbar oder über an den Randstreifen 35, 36 ausgebildeten Rastnasen, die die Bodenleiste 37 hintergreifen können.

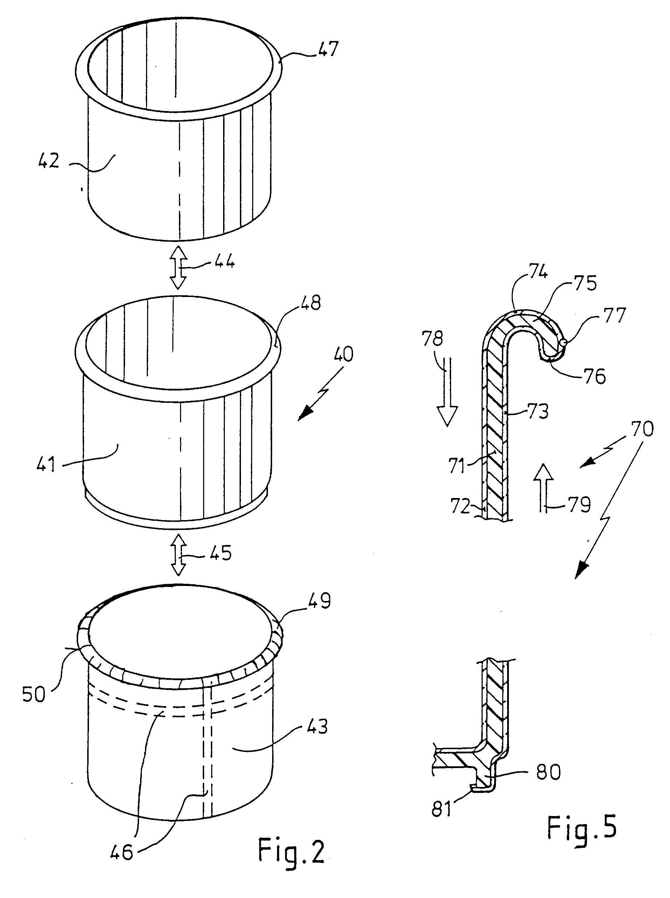

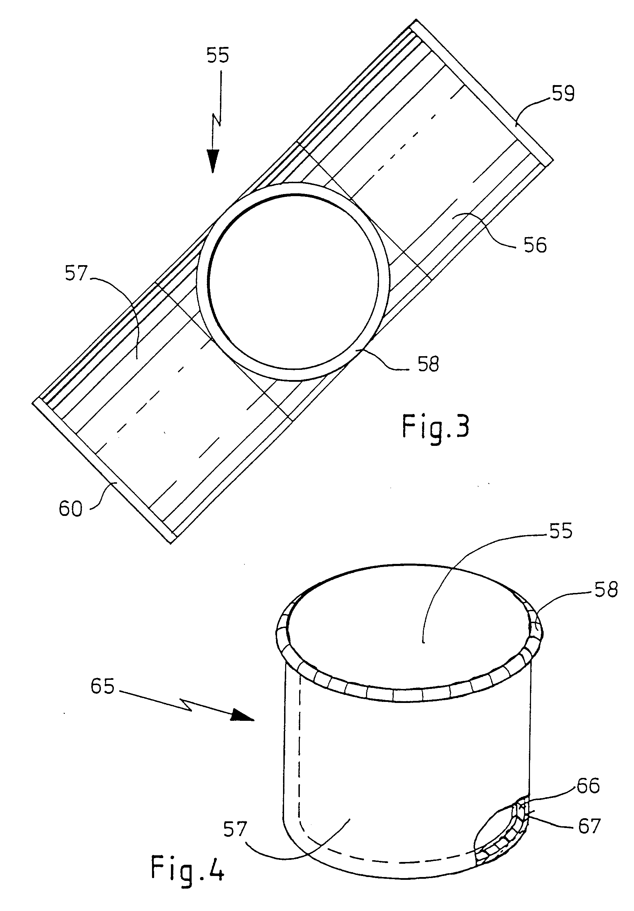

Fig. 2 zeigt ein weiteres Ausführungsbeispiel eines Mehrwegbehältnisses 40 mit einer Innenverkleidung 42 und einer Außenverkleidung 43. Sowohl die Innenverkleidung 42 wie auch die Außenverkleidung 43 sind für sich selbst formstabil und sind derart gefertigt, daß sie in gewünschter Weise die Schale 41 vollständig und eng anliegend ummanteln können. In Pfeilrichtungen 44, 45 sind die Innenverkleidung 42 und die Außenverkleidung 43 gegenüber der Schale 41 verfahrbar. An der Außenverkleidung 43 ist ein Sollbruchstellenband 46 vorgesehen, mit dem es auf einfache Weise möglich ist, die Außenverkleidung 43 von der Schale 41 zu trennen. Sind sowohl die Innenverkleidung 42 wie auch die Außenverkleidung 43 über die Schale 41 geschoben, so bedeckt ein erster Rand 47 einen zweiten Rand 48 der Schale 41 und ein dritter Rand 49 der Außenverkleidung 43 liegt von unten am zweiten Rand 48 an. Längs einer Umfangslinie 50 wird der erste Rand 47 mit dem dritten Rand 49 über bekannte Mittel stoffschlüssig verbunden. Soll danach die Außenverkleidung 43 wie auch die Innenverkleidung 42 von der Schale 41 abgezogen werden, so wird zuerst das Sollbruchstellenband 46 entfernt, und die Innenverkleidung 42 und die Außenverkleidung 43 können danach, wie in der Fig. 3 gezeigt, in Pfeilrichtungen 44, 45 verfahren werden. Das Sollbruchstellenband 46 weist, wie in der Fig. 3 gezeigt, nur eine beispielhafte Lage auf. Es kann auch am oder unterhalb des zweiten Randes 48 angeordnet sein.

Fig. 3 zeigt eine Draufsicht einer Innenverkleidung 55 mit aufgeschwenkten Flächenabschnitten 56, 57. An einem ersten Rand 58 sind die flächenhaften Abschnitte 56, 57 gelenkig befestigt. An den freien Enden der flächenhaften Abschnitte 56, 57 sind Randstreifen 59, 60 ausgebildet, über die die flächenhaften Abschnitte 56, 57 an einer Schale lösbar befestigbar sind.

Fig. 4 zeigt ein Mehrwegbehältnis 65 mit einer Schale 66. Die Schale 66 ist von der Innenverkleidung 55 ummantelt. Der Aufbruch in der Fig. 5 zeigt, wie die Schale 66 von der Innenverkleidung 55 und von dem flächenhaften Abschnitt 57 ummantelt ist. Der flächenhafte Abschnitt 57 liegt an einer Außenfläche 67 der Schale 66 an. Der flächenhafte Abschnitt 56 aus der Fig. 4 ist in der Darstellung der Fig. 5 verdeckt.

Fig. 5 zeigt einen Schnitt durch die Wand eines Mehrwegbehältnisses 70. Eine Schale 71 ist von einer Innenverkleidung 72 und einer Außenverkleidung 73 geschützt. Ein erster Rand 74 der Innenverkleidung 72 umgreift einen zweiten Rand 75 der Schale 71 am äußeren Umfang und ein dritter Rand 76 der Außenverkleidung 73 umgreift den zweiten Rand 75 von unten, so daß der zweite Rand 75 vollkommen ummantelt ist. An einer Umfangslinie 77 ist die Innenverkleidung 72 mit der Außenverkleidung 73 stoffschlüssig verbunden. Bevor ein Stoffschluß über beispielsweise eine Verschweißung der Innenverkleidung 72 mit der Außenverkleidung 73 hergestellt wird, wird die Innenverkleidung 72 und die Außenverkleidung 73 in Pfeilrichtung 78, 79 über die Schale 71 geschoben. Die Außenverkleidung 73 ist derart an die Schale 71 angepaßt, daß, sobald der dritte Rand 76 am zweiten Rand 75 zur Anlage kommt, eine Rastnase 81 der Außenverkleidung 73 an einer Bodenleiste 80 der Schale 71 lösbar einrastet.

Die in den Fig. gezeigten Innen- und Außenverkleidungen sind aus Materialien gefertigt, die entweder von UV-Strahlen zersetzt werden können oder biologisch abbaubar sind.

## Patentansprüche

1. Mehrwegbehältnis zur Aufnahme von Dispersionsfarben und/oder Putzen mit einer formstabilen Schale (26; 41; 66; 71) und mit einer mechanisch belastbaren Innenverkleidung (27; 42; 55; 72), die selbständig formstabil ist und die Innenkonturen der Schale aufweist, wobei die Innenverkleidung (27; 42; 55; 72) das aufzunehmende Gut von der Schale (26; 41; 66; 71) trennt, dadurch gekennzeichnet, daß an der Innenverkleidung (27; 42; 55; 72) mindestens ein flächenhafter Abschnitt (31, 32; 56, 57) schwenkbar angeordnet ist, der die Schale (26; 41; 66, 71) als Außenverkleidung lösbar umgreift.

2. Mehrwegbehältnis nach Anspruch 1, dadurch gekennzeichnet, daß der flächenhafte Abschnitt (31, 32; 56, 57) an mindestens einen Flächenabschnitt der Außenfläche (38; 67) der Schale (26; 66) anlegbar ist.

3. Mehrwegbehältnis nach einem oder mehreren der Ansprüche 1 oder 2, dadurch gekennzeichnet, daß die Größe von insbesondere zwei flächenhaften Abschnitten (31, 32; 56, 57) so gewählt ist, daß die Außenfläche (38; 67) der Schale (26; 66) im an der Schale (26; 66) angelegten Zustand vollständig ummantelt ist.

4. Mehrwegbehältnis nach einem oder mehreren der Ansprüche 1 bis 3, dadurch gekennzeichnet, daß die flächenhaften Abschnitte (31, 32; 56, 57) an der Außenfläche (38; 67) befestigbar sind.

5. Mehrwegbehältnis nach einem oder mehreren der Ansprüche 1 bis 4, dadurch gekennzeichnet, daß die flächenhaften Abschnitte (31, 32; 56, 57) an den freien Enden Randstreifen (35, 36; 59, 60) aufweisen, die im Bodenbereich der Schale (26; 66) befestigbar sind.

6. Mehrwegbehältnis nach Anspruch 5, dadurch gekennzeichnet, daß an der Schale (26; 71) eine nach außen weisende Bodenleiste (37; 80) oder Bodenleistenabschnitte vorgesehen sind, die mit Mitteln der flächenhaften Abschnitte (31, 32; 56, 57) verrastbar sind.

7. Mehrwegbehältnis nach einem der vorgehenden Ansprüche, dadurch gekennzeichnet, daß die Außenfläche der Innenverkleidung (27; 42; 55; 72) und die Innenfläche der Schale (26; 41; 66; 71) mit Ausformungen versehen sind, die formschlüssig ineinandergreifende Mittel aufweisen.

8. Mehrwegbehältnis nach einem der vorhergehenden Ansprüche dadurch gekennzeichnet, daß die Innenverkleidung (27; 42; 55; 72) aus einem Material gefertigt ist, das von ultravioletten Strahlen zersetzbar und/oder biologisch abbaubar ist.

9. Mehrwegbehältnis nach einem der vorhergehenden Ansprüche, dadurch gekennzeichnet, daß an der Innenverkleidung (27; 42; 55; 72) ein erster Rand (29; 47; 58; 74) vorgesehen ist, der einem zweiten Rand (30; 48; 75) der Schale (26; 41; 71) nachgebildet ist und den zweiten Rand (30; 48; 75) der Schale (26; 41; 71) zumindest teilweise ummantelt.

10. Mehrwegbehältnis nach einem der Ansprüche 1 oder 7 bis 9, dadurch gekennzeichnet, daß der Innenverkleidung (42) eine Außenverkleidung (43) zugeordnet ist und beide über ein Sollbruchstellenband (46) miteinander verbunden sind.

11. Mehrwegbehältnis nach Anspruch 1, dadurch gekennzeichnet, daß die Innenverkleidung (27; 42; 55; 72) im Tiefziehverfahren hergestellt ist.

12. Mehrwegbehältnis nach Anspruch 11, dadurch gekennzeichnet, daß zur Ummantelung der Schale (41) in einem ersten Arbeitsvorgang die Innenverkleidung (42) und die Außenverkleidung (43) an der Schale (41) stoffschlüssig miteinander verbunden werden und in einem zweiten Arbeitsvorgang das Sollbruchstellenband (46) in die Verkleidung der Schale (41) eingeprägt wird.

## Claims

1. Re-usable container for the holding of latex paint and/or plaster with a defined outer containing structure (26; 41; 66; 71) and a mechanically stable inner lining (27; 42; 55; 72) having an individually defined structure exhibiting the inner contours of the outer containing structure, whereby the inner lining (27; 42; 55; 72) separates the materials to be held from the outer containing structure (26; 41; 66; 71), characterized in that at least one areal section (31, 32; 56, 57) is arranged in a pivotable fashion on the inner lining (27; 42; 55; 72) to constitute an outer jacket detachable from and surrounding the outer containing structure (26; 41; 66; 71).

2. Re-usable container according to claim 1, characterized in that the areal section (31, 32; 56, 57) can be applied to at least one section of the outer surface (38; 67) of the outer containing structure (26; 66).

3. Re-usable container according to one or more of the claims 1 or 2, characterized in that the size of, in particular, two areal sections (31, 32; 56, 57) is chosen in such a fashion that, in the state in which they are applied to the outer containing structure (26; 66), the outer surface (38; 67) of the outer containing structure (26; 66) is completely enclosed.

4. Re-usable container according to one or more of the claims 1 through 3, characterized in that the areal sections (31, 32; 56, 57) can be attached to the outer surface (38; 67).

5. Re-usable container according to one or more of the claims 1 through 4, characterized in that the areal sections (31, 32; 56, 57) exhibit edge strips (35, 36; 59, 60) on the free ends which are attachable to the bottom region of the outer containing structure (26; 66).

6. Re-usable container according to claim 5, characterized in that, an outwardly facing bottom moulding (37; 80) or bottom moulding sections are provided for on the outer containing structure (26; 71) which snappingly engage means of the areal sections (31, 32; 56, 57).

7. Re-usable container according to one of the preceding claims, characterized in that the outer surface of the inner lining (27; 42; 55; 72) and the inner surface of the outer containing structure (26; 41; 66; 71) are provided with contours which exhibits matching mutually engaging means.

8. Re-usable container according to one of the preceding claims, characterized in that the inner lining (27; 42; 55; 72) is made from a material which can be decomposed by ultraviolet rays and/or is biologically degradable.

9. Re-usable container according to one of the preceding claims, characterized in that a first edge (29; 47; 58; 74) is provided on the inner lining (27; 42; 55; 72) which conforms with a second edge (30; 48; 75) of the outer containing structure (26; 41; 71) and which at least partially surrounds the second edge (30; 48; 75) of the outer containing structure (26; 41; 71).

10. Re-usable container according to one of the claims 1 or 7 through 9, characterized in that the inner lining (42) is associated with an outer lining (43) both of which are connected to each other by a tape exhibiting designated separation locations (46).

11. Re-usable container according to claim 1, characterized in that, the inner lining (27; 42; 55; 72) is manufactured using a swage process.

12. Re-usable container according to claim 11, characterized in that, in a first processing step towards jacketing the outer containing structure (41), the inner lining (42) and the outer lining (43) are materially fit and connected to each other at the outer containing structure (41) and, in a second processing step, the tape having designated separation locations (46) is pressed into the lining of the outer containing structure (41).

## Revendications

1. Récipient réutilisable destiné à recevoir des couleurs en dispersion et/ou des enduits, comprenant une enveloppe de forme stable (26; 41; 66; 71) et un revêtement interne (27; 42; 55; 72) qui peut être sollicité mécaniquement, est de forme stable de façon autonome et présente les contours internes de l'enveloppe, le revêtement interne (27; 42; 55; 72) séparant la matière à recevoir de l'enveloppe (26; 41; 66; 71), caractérisé en ce que sur le revêtement interne (27; 42; 55; 72) est agencée de manière à pouvoir pivoter au moins une section à grande surface (31, 32; 56, 57) qui entoure de manière détachable l'enveloppe (26; 41; 66, 71) sous la forme d'un revêtement externe.

2. Récipient réutilisable suivant la revendication 1, caractérisé en ce que la section à grande surface (31, 32; 56, 57) peut être appliquée sur au moins une section de la surface externe (38; 67) de l'enveloppe (26; 66).

3. Récipient réutilisable suivant une ou plusieurs des revendications 1 et 2, caractérisé en ce que la dimension en particulier de deux sections à grande surface (31, 32; 56, 57) est choisie de façon que la surface externe (38; 67) de l'enveloppe (26; 66) soit totalement enveloppée, à l'état appliqué sur l'enveloppe (26; 66).

4. Récipient réutilisable suivant une ou plusieurs des revendications 1 à 3, caractérisé en ce que les sections à grande surface (31, 32; 56, 57) peuvent être fixées sur la surface externe (38; 67).

5. Récipient réutilisable suivant une ou plusieurs des revendications 1 à 4, caractérisé en ce que les sections à grande surface (31, 32; 56, 57) présentent aux extrémités libres des bandes marginales (35, 36; 59, 60) qui peuvent être fixées dans la zone de fond de l'enveloppe (26; 66).

6. Récipient réutilisable suivant la revendication 5, caractérisé en ce que sur l'enveloppe (26; 71) sont prévues une nervure de fond (37; 80) ou des sections de rainure de fond qui sont dirigées vers l'extérieur et qui peuvent s'engager avec des moyens des sections à grande surface (31, 32; 56, 57).

7. Récipient réutilisable suivant une des revendications précédentes, caractérisé en ce que la surface externe du revêtement interne (27; 42; 55; 72) et la surface interne de l'enveloppe (26; 41; 66; 71) sont pourvues de déformations qui présentent des moyens qui s'engagent l'un dans l'autre par une liaison due à la forme.

8. Récipient réutilisable suivant l'une des revendications précédentes, caractérisé en ce que le revêtement interne (27; 42; 55; 72) est fabriqué en une matière qui peut être décomposée par des rayons ultraviolets et/ou peut être dégradée biologiquement.

9. Récipient réutilisable suivant l'une des revendications précédentes, caractérisé en ce que, sur le revêtement interne (27; 42; 55; 72), est prévu un premier bord (29; 47; 58; 74) qui est une copie d'un deuxième bord (30; 48; 75) de l'enveloppe (26; 41; 71) et qui enveloppe au moins partiellement le deuxième bord (30; 48; 75) de l'enveloppe (26; 41; 71).

10. Récipient réutilisable suivant l'une des revendications 1 ou 7 à 9, caractérisé en ce qu'au revêtement interne (42) est adjoint un revêtement externe (43) et en ce que tous deux sont mutuellement reliés par l'intermédiaire d'une bande à points destinés à la rupture (46).

11. Récipient réutilisable suivant la revendication 1, caractérisé en ce que le revêtement interne (27; 42; 55; 72) est fabriqué dans un procédé par emboutissage.

12. Récipient réutilisable suivant la revendication 11, caractérisé en ce que, pour envelopper l'enveloppe (41), le revêtement interne (42) et le revêtement externe (43) sont mutuellement reliés par une liaison de matière sur l'enveloppe (41), dans une première opération, et la bande à points destinés à la rupture (46) est imprimée dans le revêtement de l'enveloppe (41), dans une deuxième opération.
